# EUROPEAN PATENT SPECIFICATION

(11) **EP 1 520 968 B1**
(45) Date of publication and mention of the grant of the patent: **05.07.2006**
(21) Application number: 04020277.2
(22) Date of filing: 26.08.2004
(51) Int. Cl.: F02D 9/04, F01N 7/10, F01N 7/08

(54) **Exhaust control device of motorcycle**
Abgassteuervorrichtung für Motorräder
Dispositif de commande des gaz d'échappement pour motocyclettes

(30) Priority: 30.09.2003 JP 2003339789
(43) Date of publication of application: 06.04.2005
(73) Proprietor: HONDA MOTOR CO., Ltd., Tokyo (JP)
(72) Inventor: Inaoka, Hiroshi, 1-4-1 Chuo, Wako-shi, Saitama (JP); Sasaki, Norihiko, 1-4-1 Chuo, Wako-shi, Saitama (JP); Takami, Noritake, 1-4-1 Chuo, Wako-shi, Saitama (JP); Tamai, Hiroaki, 1-4-1 Chuo, Wako-shi, Saitama (JP); Moriyama, Yuichi, 1-4-1 Chuo, Wako-shi, Saitama (JP)
(74) Representative: Rupp, Christian

(56) References cited:
- US-A- 3 938 330
- US-A1- 2002 050 415
- PATENT ABSTRACTS OF JAPAN vol. 016, no. 161 (M-1237), 20 April 1992 (1992-04-20) & JP 04 012114 A (NISSAN MOTOR CO LTD), 16 January 1992 (1992-01-16)

## Description

### [Technical Field to which the Invention Belongs]

The present invention relates to an exhaust control device of a motorcycle which can ensure a smooth flow of an exhaust gas.

As an exhaust control device of a motorcycle, an exhaust control device of a motorcycle which mounts a valve in an exhaust passage of an engine exhaust system and controls a flow rate of an exhaust gas which flows in the exhaust passage by the valve has been practically used.
The exhaust control device of a motorcycle for practical use is practically sufficient provided that the valve is mounted on the exhaust pipe which constitutes an exhaust passage and the valve can be opened or closed.

As such an exhaust control device of a motorcycle, an exhaust control device which mounts an exhaust valve on a pipe (an exhaust pipe) has been known (see patent literature 1).
[patent literature 1] Japanese Unexamined Patent Publication Hei7(1995)-145732

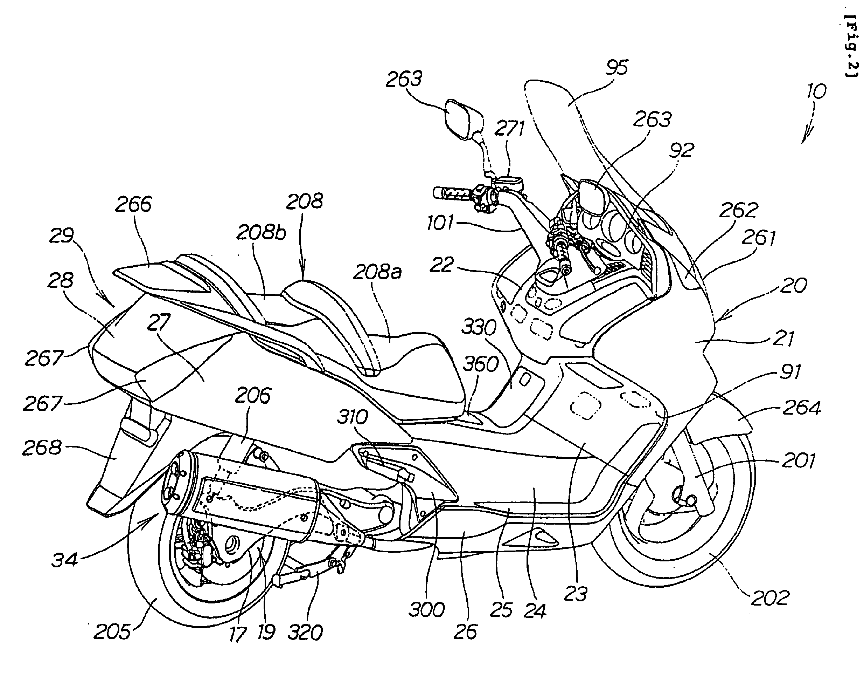

Fig. 18 is a reproduced view of Fig. 2 in patent literature 1. However, symbols of patent literature 1 are directly used in this specification.
The exhaust control device of a motorcycle described in patent literature 1 is constituted of an exhaust valve 20 which allows a shaft 22 to penetrate a cylindrical surface of a pipe (an exhaust pipe) 21 and mounts a valve 23 for controlling a flow rate of an exhaust gas on the shaft 22, wherein the shaft 22 is allowed to penetrate the approximately center of the pipe 21 (a portion corresponding to the diameter of the pipe 21).

However, in the exhaust control device of a motorcycle described in patent literature 1, since the shaft 22 which mounts a valve 23 thereon is allowed to penetrate the pipe 21 at the approximately center of the pipe 21, an exhaust gas which flows at the approximately center of the pipe 21 (a portion corresponding to the diameter of the pipe 21) flows while taking a roundabout route around the shaft 22 and hence, a turbulent flow is generated in the inside of the pipe 21 thus giving rise to a drawback that the exhaust efficiency is lowered.

That is, there has been a demand for an exhaust control device for a motorcycle which can ensure a smooth flow of an exhaust gas when an exhaust valve 20 is arranged in an exhaust passage including an exhaust pipe

US 2002/0050415 A1 discloses an exhaust system of a multi-cylinder engine of a motor-cycle comprising exhaust pipes connected to respective cylinders of the engine. The exhaust pipes are collected as a single exhaust pipe collection unit. Further, a muffler to which the collection pipe section is connected, an interconnecting pipe through which the exhaust pipes and the muffler are connected, and an exhaust control system for controlling pulsation of an exhaust gas are provided. The exhaust control system comprises a valve mechanism which serves for varying the cross-sectional area of the exhaust passage. The valve mechanism includes a valve member, a valve shaft and a pulley. Moreover, the valve mechanism is mounted on the interconnecting pipe and is disposed so that its axis extends substantially perpendicular to the bank line indicating the maximum allowable bank angle or leaning angle, respectively, of the motorcycle body.

It is an object of the present invention to provide an exhaust control device for a motorcycle which can enhance the exhaust efficiency and can enhance the performance of exhaust control by ensuring a smooth flow of an exhaust gas which flows in the center portion of the exhaust pipe in arranging an exhaust valve in an exhaust passage such as an exhaust pipe. This object is solved by an exhaust control device having the features of claim 1. Preferred embodiments of the invention are defined in the dependents claims.

The invention according to claim 1 is directed to a exhaust control device of a motorcycle which includes a collection pipe which collects a plurality of exhaust pipes and an exhaust valve which controls a flow rate of an exhaust gas to the collection pipe, wherein the improvement is characterized in that a shaft of the exhaust valve is arranged at a position away from the centers of the plurality of exhaust pipes.

For example, in arranging the exhaust valve which controls the flow rate of the exhaust gas in the exhaust passage including the exhaust pipe disposed at the center portions of exhaust pipes, it is desirable to ensure a smooth flow of the exhaust gas and to enhance the discharge efficiency if the exhaust valve can be arranged such that the interruption of the flow of the exhaust gas by the exhaust valve can be suppressed to a least amount.

Accordingly, the exhaust valve which controls a flow rate of the exhaust gas is provided to the collection pipe and the shaft of the exhaust valve is arranged at a position away from the centers of the plurality of exhaust pipes.
That is, by providing the exhaust valve which controls a flow rate of the exhaust gas to the collection pipe and by arranging the shaft of the exhaust valve at a position away from the centers of the plurality of exhaust pipes, it is possible to ensure the smooth flow of the exhaust gas and can enhance the exhaust efficiency.

Further, the invention according to claim 2 is characterized in that when the plurality of exhaust pipes are formed of two pipes, the shaft of the exhaust valve is inclined within a range of 35 to 55 degrees with respect to a straight line which connects the centers of two exhaust pipes.
By imparting the inclination to the shaft of the exhaust valve within a range of 35 to 55 degrees to the straight line which connects the centers of two exhaust pipes, it is possible to ensure a height of the motorcycle above a ground and can accommodate the exhaust control device within a bank angle.

According to the invention of claim 1, the exhaust valve which controls a flow rate of the exhaust gas is provided to the collection pipe and the shaft of the exhaust valve is arranged at a position away from the centers of the plurality of exhaust pipes and hence, it is possible to ensure the smooth flow of the exhaust gas and to enhance the exhaust efficiency. As a result, it is possible to obtain an advantageous effect that the exhaust gas control ability of the exhaust control device of the motorcycle can be enhanced.

According to the invention of claim 2, when the plurality of exhaust pipes are formed of two pipes, the shaft of the exhaust valve is inclined within a range of 35 to 55 degrees with respect to a straight line which connects the centers of two exhaust pipes and hence, it is possible to ensure a height of the motorcycle above a ground and can easily accommodate the exhaust control device within a bank angle. As a result, it is possible to obtain an advantageous effect that the degree of freedom in the layout of the exhaust control device of the motorcycle can be enlarged.
[Fig. 1]
   A left-side appearance view of a motorcycle which mounts an exhaust control device according to the present invention thereon.
[Fig. 2]
   A right-side appearance view of a motorcycle which mounts an exhaust control device according to the present invention thereon.
[Fig. 3]
   A side cross-sectional view of a motorcycle which mounts an exhaust control device according to the present invention.
[Fig. 4]
   A perspective view of a vehicle body frame of a motorcycle which mounts an exhaust control device according to the present invention.
[Fig. 5]
   A left side view of an engine of a motorcycle which mounts an exhaust control device thereon, a power transmission mechanism and a seat according to the present invention.
[Fig. 6]
   A side view of an exhaust control device of a motorcycle according to the present invention.
[Fig. 7]
   The exhaust control device of a motorcycle according to the present invention is preferably adopted by the motorcycle which mounts a multi-cylinder engine thereon.
   An exploded perspective view of an exhaust system device which mounts an exhaust control device according to the present invention thereon.
[Fig. 8]
   A perspective view of an exhaust control device of a motorcycle according to the present invention.
[Fig. 9]
   A layout view of the arrangement relationship between an exhaust pipe and an exhaust valve of the exhaust control device of a motorcycle according to the present invention.
[Fig. 10]
   A front cross-sectional view of the exhaust valve of the exhaust control device of a motorcycle according to the present invention.
[Fig. 11]
   A plan view of an exhaust valve of an exhaust control device of a motorcycle according to the present invention.
[Fig. 12]
   A side view of an exhaust valve of an exhaust control device of a motorcycle according to the present invention.
[Fig. 13]
   An explanatory view for explaining the manner of operation of the exhaust control device of a motorcycle according to the present invention.
[Fig. 14]
   A perspective view of the exhaust control device of a motorcycle according to the present invention as viewed from an upper rear position.
[Fig. 15]
   A perspective view showing a rear side of the exhaust control device of a motorcycle according to the present invention.
[Fig. 16]
   A plan view showing the arrangement relationship of a swing arm and an exhaust valve of the exhaust control device of a motorcycle according to the present invention.
[Fig. 17]
   An explanatory view for explaining a mounting angle of an exhaust valve of the exhaust control device of a motorcycle according to the present invention.
[Fig. 18]
   A reproduced view of Fig. 2 of patent literature 1.

The best mode for carrying out the present invention is explained in conjunction with attached drawings hereinafter. Here, the drawings are assumed to be observed in the direction of symbols.

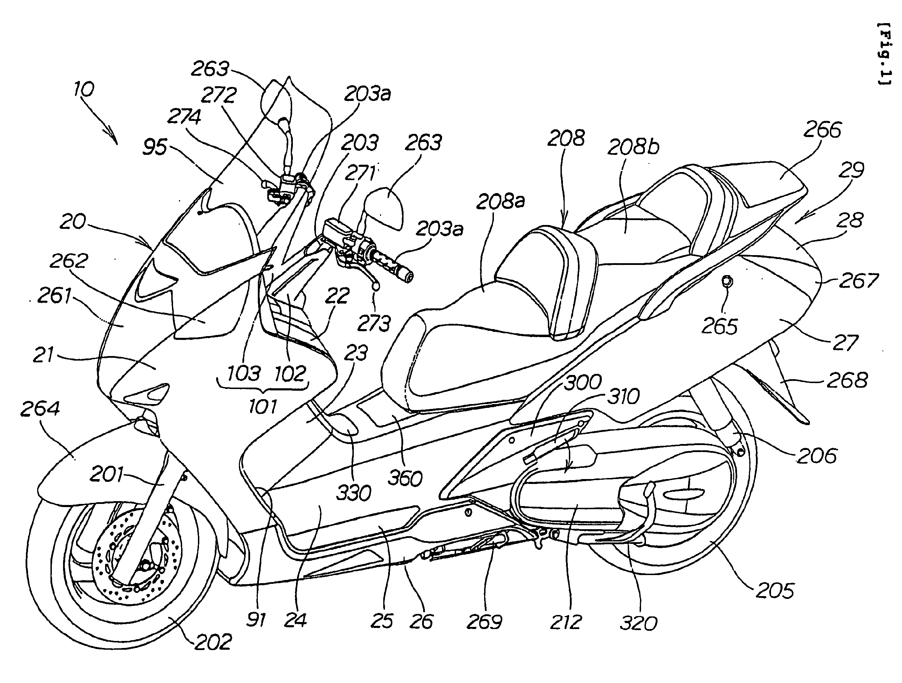

Fig. 1 is a left-side appearance view of a motorcycle which mounts an exhaust control device according to the present invention, wherein the motorcycle 10 is a scooter-type vehicle having a low-floor-type floor 25.
A vehicle body cover 20 which covers the whole vehicle body frame of the motorcycle 10 includes a front cowl 21 which covers a front portion of the vehicle body frame described later and an upper portion of a front wheel, an upper cover 22 which covers an upper opening formed in the front cowl 21, an inner cover 23 which covers a rear portion of the front cowl 21, a center cover 24 which extends rearwardly from a rear end of the inner cover 23 and covers the longitudinal center of the vehicle body frame, the low-floor-type floor 25 which extends outwardly from an outer periphery of a lower end of the center cover 24 and allows the placing of a driver's feet thereon, a floor skirt 26 which extends downwardly from an outer periphery of the low-floor-type floor 25, rear side covers 27, 27 (the rear side cover 27 at a depth side not shown in the drawing) which extend rearwardly from the center cover 24 and cover the rear side portion of the vehicle body frame, and rear cover 28 which extend rearwardly from the rear end of the rear side covers 27, 27 and cover the rear side portion of the vehicle body frame. Here, the rear side covers 27, 27 and the rear cover 28 constitute a seat cowl 29.

The front cowl 21 includes a transparent wind screen 95 on an upper portion thereof. The inner cover 23 includes a leg shield 91 for covering a front portion of a driver's legs.
Further, the motorcycle 10 includes a handle 203 at a front portion of the body and also includes a seat 208 and a step holder 300 on a rear portion of the body.

The handle 203 is a product of a type similar to a so-called chopper type handle in which grips 203a, 203a are arranged at a relatively high position and are retracted in the rearward direction. The handle 203 is covered with a handle cover 101. The handle cover 101 is formed of a lower handle cover 102 which covers left and right lower portions of the handle 203 and an upper handle cover 103 which covers an upper portion of the handle 203.

The seat 208 is of a double seat type which is formed of a front seat portion 208a on which a driver sits and a rear seat portion 208b on which an occupant sits. The step holder 300 is arranged close to the rear portion of the center cover 24 and is provided for mounting a pillion step (an occupant step) 310 thereon such that the pillion step 310 can be stored in or exposed from the step holder 300. Here, the pillion step 310 is served for allowing an occupant to put his/her foot thereon.

In the drawing, numeral 261 indicates a head lamp, numeral 262 indicates a blinker, numerals 263, 263 indicate mirrors, numeral 264 indicates a front fender, numeral 265 indicates a lock for seat lock, numeral 266 indicates a rear spoiler, numeral 267 indicates a tail lamp, numeral 268 indicates a rear fender, numeral 269 indicates a sub stand, numeral 320 indicates a main stand, numeral 330 indicates a lid for oil supply, numeral 360 indicates a side lid for inspection.
Here, numerals 271, 272 are master cylinders and generate a fluid pressure for braking with the manipulation of brake levers 273, 274.

Fig. 2 is a right-side appearance view of the motorcycle which mounts an exhaust control device according to the present invention thereon. The drawing is served for showing that a meter panel 92 is provided above the front cowl 21 and, at the same time, behind a wind screen 95. As clearly understood from the explanation made heretofore, the wind screen 95, the leg shield 91 and the meter panel 92 may be provided to the front portion of the body.
Further, this drawing also shows that the step holder 300 which includes the pillion step 310 is also arranged at the right-side of the motorcycle 10. Numeral 34 indicates a muffler (an exhaust muffler).

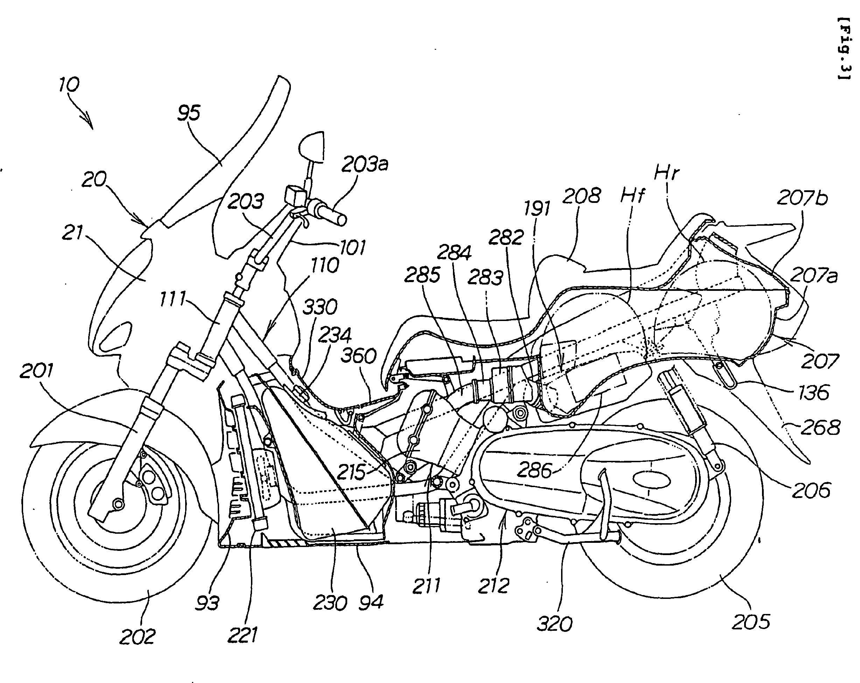

Fig. 3 is a side cross-sectional view of the motorcycle which mounts the exhaust control device according to the present invention thereon. The motorcycle 10 is a scooter-type vehicle and includes, as the main components thereof, a vehicle body frame 110, a front fork 201 which is mounted on the head pipe 111 of the vehicle body frame 110 in such a manner that the front fork 201 can swing in the left-and-right direction, a front wheel 202 which is mounted on the front fork 201, the above-mentioned handle 203 which is connected to the front fork 201, an engine 211 which is mounted on the rear portion of the vehicle body frame 110, a power transmission mechanism 212 which is swingable in the upward-and-downward direction about the crankshaft of the engine 211, a rear wheel 205 which is mounted on a rear portion of the power transmission mechanism 212, a rear cushion unit 206 which suspends a rear end portion of the power transmission mechanism 212 on the vehicle body frame 110, an accommodation box 207 which is mounted on the rear upper portion of the vehicle body frame 110, and the above-mentioned seat 208 which is arranged on the accommodation box 207 in such a manner that the seat 208 can be opened or closed.

The front fork 201 is a U-shaped fork arranged below the head pipe 111. An upper portion of the front fork 201 and the head pipe 111 are arranged to be covered with the front cowl 21.
The engine 211 is a water-cooled two-cylinder engine which is substantially horizontally arranged, wherein the engine 211 has two left and right cylinder heads 215 which are slightly inclined in the frontward and upward direction. The power transmission mechanism 212 is a belt converter variable-speed drive mechanism equipped with a centrifugal clutch and transmits the power of the engine 211 to the back wheel 205.

The accommodation box 207 is a long and narrow box extended in the fore-and-aft direction of the body such that the accommodation box 207 can accommodate two helmets Hf, Hr in front and rear portions thereof. That is, the accommodation box 207 is formed of a lower box 207a and an upper box 207b which is overlapped to a rear upper portion of the lower box 207a.
In the drawing, numeral 93 indicates a front lower cover, numeral 94 indicates an under cover, numeral 191 indicates an air cleaner, numeral 221 indicates a radiator, 230 indicates a fuel tank, numeral 234 indicates a refueling opening, numeral 282 indicates a connecting tube, numeral 283 indicates an air chamber, numeral 284 indicates a throttle valve, numeral 285 indicates an inlet pipe (inlet pipe) and numeral 286 indicates a battery.

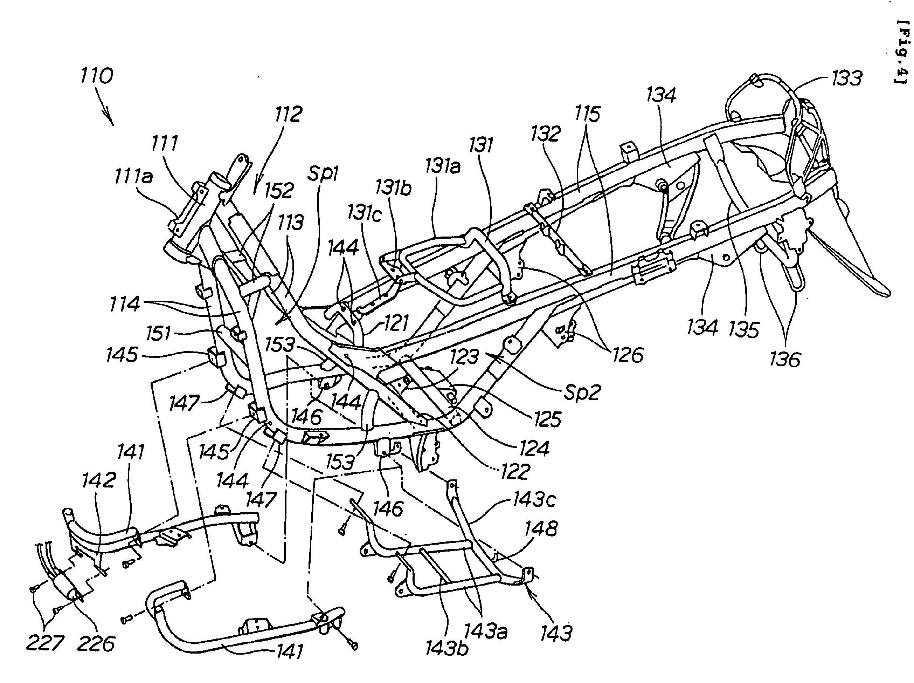

Fig. 4 is a perspective view of the vehicle body frame of the motorcycle which mounts the exhaust control device according to the present invention thereon and the vehicle body frame 110 is a double cradle-type integrated frame which joins by welding a front frame 112 which is contiguously formed with the head pipe 111 and a pair of left and right seat rails (rear frames) 115, 115 which are extended rearwardly from a rear portion of the front frame 112. The head pipe 111 includes a bracket 111a for cowl stay.

The front frame 112 is configured as follows. A pair of left and right upper frames 113, 113 are extended downwardly and rearwardly from the head pipe 111. A pair of left and right down tubes 114, 114 is extended downwardly from the head pipe 111 below the pair of upper frames 113, 113. The lower ends of the pair of down tubes 114, 114 are extended rearwardly and are connected to lower ends of the pair of upper frames 113, 113 and, thereafter, are extended in the rearward and upward direction. The front frame 112 having such a constitution can define a space portion Sp1 having an approximately triangular shape as viewed from the side which is surrounded by the pair of upper frames 113, 113 and the pair of down tubes 114, 114.

Between a front end of the left rear frame 115 and a front end of the right rear frame 115, a first cross member 121 of a gate type as viewed from the front is laid, while between a lower end of the left upper frame 113 and a lower end of the right upper frame 113, a second cross member 122 is laid. Further, a first bracket 123 for engine is connected to the second cross member 122 at the center position thereof in the vehicle width direction.

Between a rear end portion of a horizontal portion of the left down tube 114 and a rear end portion of the horizontal portion of the right down tube 114, a third cross member 124 is laid, while a second bracket 125 for engine is joined to the third cross member 124 at a center position thereof in the vehicle width direction. Further, left and right third brackets for engine 126, 126 are joined to rear ends of the left and right down tubes 114, 114.

A pair of left and right rear frames 115, 115 is members having a longitudinally-elongated cross-sectional shape and has one ends thereof connected to longitudinally midst portions of the pair of left and right upper frames 113, 113 and other ends thereof extended rearwardly. Here, " longitudinally-elongated cross-sectional shape" means a cross-sectional shape having a longitudinal size set larger than a lateral size. To be more specific, the rear frames 115, 115 are formed of a quadrangular pipe having vertical a longitudinally-elongated rectangular cross section.

In the drawing, numeral 131a indicates a U-shaped stay, numeral 131b indicates a seat hinge support portion, numeral 131c indicates an extending member, numeral 141 indicates a floor support stay, numeral 143 indicates an under frame, numeral 144 indicates a pin with a head, numeral 142 indicates a stay, numerals 143a, 143a indicate left and right side members, numeral 143b indicates a center cross member, numeral 143c indicates a rear cross member, numerals 145 to 147 indicate brackets, numeral 148 indicates a hook, numeral 151 indicates a front cross member, numerals 152, 153 indicate reinforcement members, numeral 226 indicates an ignition coil for engine and numeral 227 indicates a bolt.

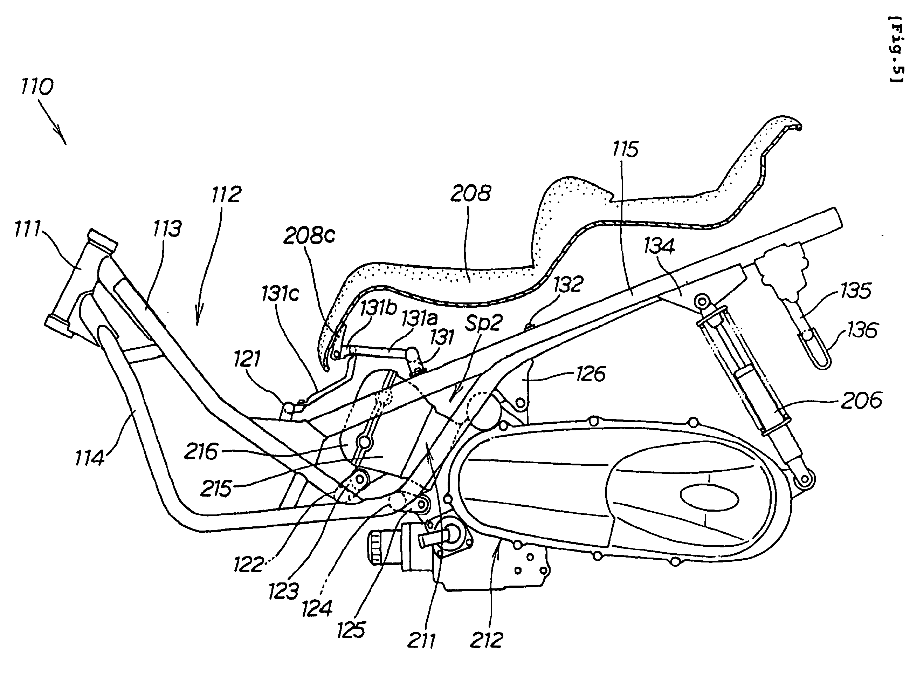

Fig. 5 is a left side view of the engine, the power transmission mechanism and the seat of the motorcycle which mounts the exhaust control device thereon according to the present invention and shows the constitution that the engine 211 and the power transmission mechanism 212 are arranged behind the front frame 112 and below a pair of rear frames 115, 115 and the engine 211 is mounted in the vicinity of the connection portion of the front frame 112 and the left and right rear frames 115, 115 (only left rear frame 115 shown in the drawing, the definition being used hereinafter).

To be more specific, behind the front frame 112, a space portion Sp2 having an approximately triangular shape as viewed from the side and is surrounded by the pair of upper frames 113, 113, the pair of down tubes 114, 114 and the pair of rear frames 115, 115 is formed. A cylinder head 215 and a head cover 216 of the engine 211 are arranged in the space portion Sp2. A front lower portion of the engine 211 is mounted on a first bracket 123 for engine, a rear lower portion of the engine 211 is mounted on a second bracket 125 for engine and a rear upper portion of the engine 211 is mounted on third brackets 126, 126 for engine. Here, front and middle rear cross members 131, 132 are arranged above the engine 211.

Further, this drawing shows the constitution in which a rear end portion of the power transmission mechanism 212 is suspended on left and right cushion brackets 134, 134 by way of left and right rear cushion units 206, 206 and the front rear cross member 131 also serves as a member for supporting a seat hinge 208c of the open-and-close type seat 208.

That is, the above-mentioned constitution should be understood that, in the vehicle body frame 110 of the scooter-type vehicle in which the pair of left and right rear frames 115, 115 (one rear frame 115 not shown in the drawing) are extended rearwardly from the rear section of the front frame 112 which is contiguously formed with the head pipe 111 and seat 208 and the rear cushion units 206, 206 (one rear cushion unit 206 not shown in the drawing) are supported on the rear frames 115, and the engine 211 is arranged behind the front frame 112 and below the pair of rear frames 115, 115, the cross members 131 to 133 (see Fig, 4 with respect to symbol 133) are replaceably laid between the pair of left and right rear frames 115, 115 about the engine 211.

The exhaust control device 11 of the motorcycle (hereinafter abbreviated as the exhaust control device 11) is explained in detail hereinafter.

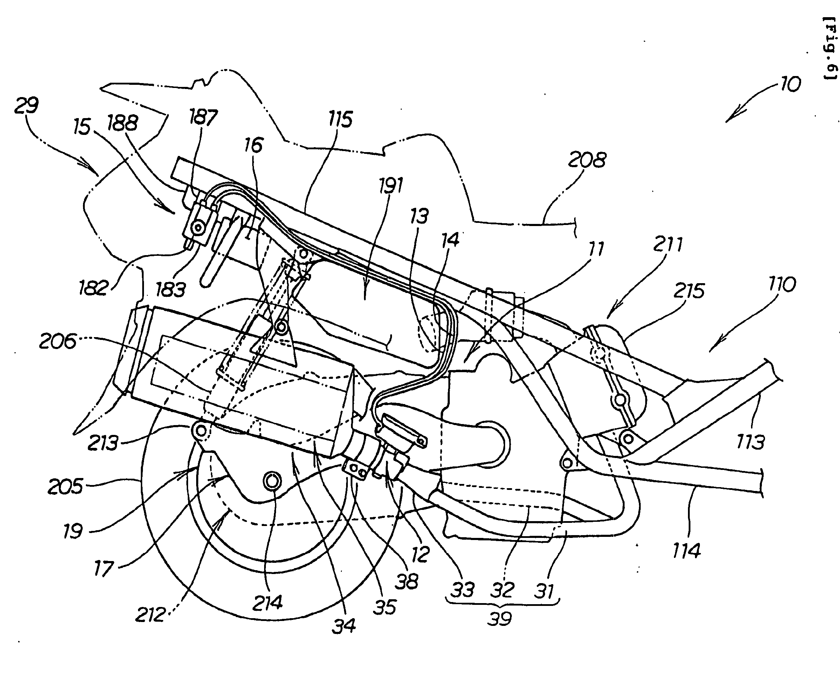

Fig. 6 is a side view of the exhaust control device of the motorcycle according to the present invention.
The exhaust control device 11 of the motorcycle (hereinafter abbreviated as the exhaust control device 11) includes an exhaust valve 12 which is mounted on an exhaust pipe 39 for changing a flow rate of an exhaust gas, operation wires 13, 14 which operate the exhaust valve 12, a servo motor 15 which drives these operation wires 13, 14 and a control part (ECU)16 which controls the flow rate of the exhaust gas by controlling the servo motor 15.
Generally, ECU (electronic control unit) indicates an electric control device which controls the engine, an AT (automatic transmission) and an ABS (antilock brake system) and the like using a computer.

A rear cushion arm 17 which is positioned in the vicinity of the exhaust valve 12 is a member which is integrally attached to the previously-mentioned power transmission mechanism 212 for supporting the right rear cushion unit 206 and, at the same time, for rotatably supporting the rear wheel 205. The rear cushion arm 17 includes a cushion support portion 213 which supports the rear cushion unit 206, a rear wheel support portion 214 which supports the rear wheel 205, and a recessed portion 18 which is recessed toward the center of the vehicle body. A swing arm (a rear fork) 19 which rotatably supports the rear wheel 205 is constituted of the power transmission mechanism 212 and the rear cushion arm 17.

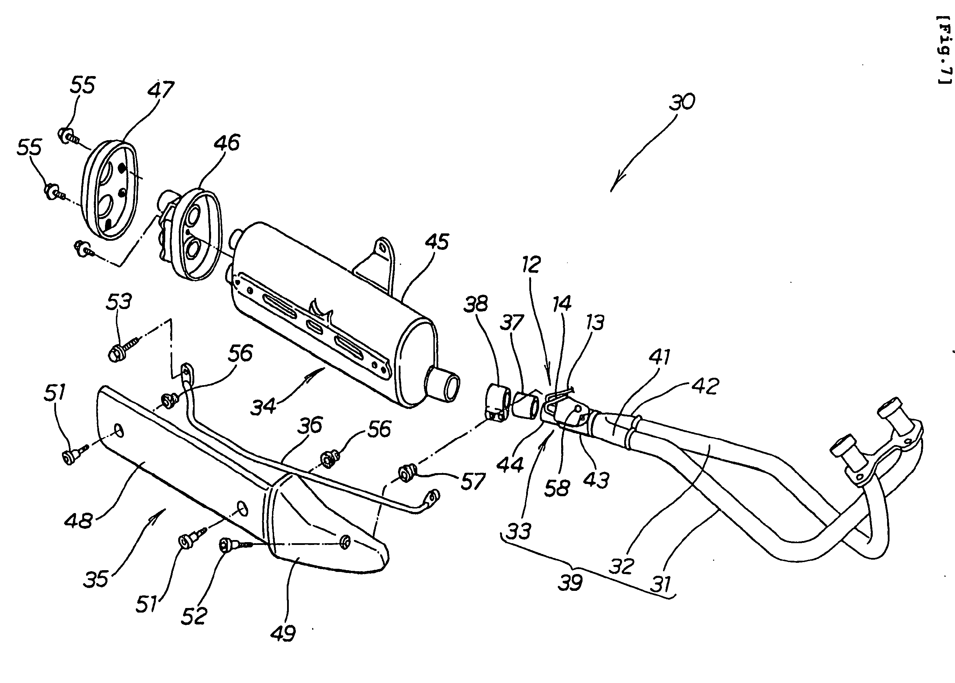

Fig. 7 is an exploded perspective view of the exhaust system device which mounts the exhaust control device according to the present invention thereon. The exhaust system device 30 is constituted of a first and a second pipes 31, 32 which are extended from the engine 211 (see Fig. 6), an exhaust collection pipe 33 which constitutes a collection pipe which merges these first and second pipes 31, 32, a muffler 34 which is connected to the exhaust collection pipe 33, a muffler protector 35 which covers the muffler 34, a muffler guard 36 which protects the muffler 34, and a band 38 which fixes the muffler 34 to the exhaust collection pipe 33 by way of a gasket 37.

Generally, although the exhaust pipe means exhaust pipes which are connected to respective cylinders of the engine, in this specification, the exhaust pipe 39 means a pipe which is constituted of first and second pipes 31, 32 and an exhaust collection pipe 33.
The exhaust collection pipe 33 is formed of a first connection portion 41 to which the first pipe 31 is connected, a second connection portion 42 to which the second pipe 32 is connected, a valve mounting portion 43 which mounts the exhaust valve 12 thereon and a connection portion 44 to which a muffler 34 is connected.

The muffler 34 is constituted of a muffler body 45, a tail pipe assembly 46 which is mounted on the muffler body 45 and a tail cover 47 which covers the tail pipe assembly 46.
The muffler protector 35 is constituted of a protector body portion 48 which covers the side surface of the muffler body 45 and a cover portion 49 which is integrally extended from the protector body portion 48 to the front of the body and covers the exhaust valve 12.

In the drawing, numeral 51 indicates bolts which fix a protector body portion 48 to the muffler body 45 by way of elastic bushings 56, numeral 52 indicates a bolt which fixes the cover portion 49 to a mounting portion 58 of the exhaust valve 12 by way of an elastic bushings 57, numeral 53 indicates a bolt which fixes the muffler guard 36 to the muffler body 45, numeral 54 indicates a bolt which fixes the tail pipe assembly 46 to the muffler body 45 and numeral 55 indicates bolts which fixes the tail cover 47 to the muffler body 45 by way of the tail pipe assembly 46.

The exhaust control device 11 is constituted as follows. That is, in the motorcycle 10 (see Fig. 2) in which the engine 211 (see Fig. 6) is mounted on the vehicle body frame 110 (see Fig. 4), the exhaust pipe 39 is connected to the engine 211, the muffler 34 is mounted on the exhaust pipe 39, and the exhaust valve 12 controlling the flow rate of the exhaust gas is provided to the exhaust pipe 39, the muffler protector 35 is mounted on the muffler 34, the cover portion 49 is integrally extended from the muffler protector 35, and the exhaust valve 12 is covered with the cover portion 49.

For example, when the exhaust valve is covered with a cover or the like, provided that the exhaust valve can be covered without increasing the number of parts by making use of existing parts, the manufacturing cost of the motorcycle can be suppressed and hence, such a provision is favorable.

Accordingly, by integrally extending the cover portion 49 from the muffler protector 35 and by covering the exhaust valve 12 with the cover portion 49, the number of parts can be reduced compared to a case in which the exhaust valve is covered with separate members. As a result, the manufacturing cost of motorcycle 10(see Fig. 6) can be reduced.
Further, by integrally extending the cover portion 49 from the muffler protector 35 and by covering the exhaust valve 12 with the cover portion 49, the design and the merchantability of the motorcycle 10 can be enhanced.
Further, by forming the mounting portion 58 which is served for mounting the cover portion 49 to the exhaust valve 12, both of the vibration of the cover portion 49 and the vibration of the exhaust valve 12 can be stopped.

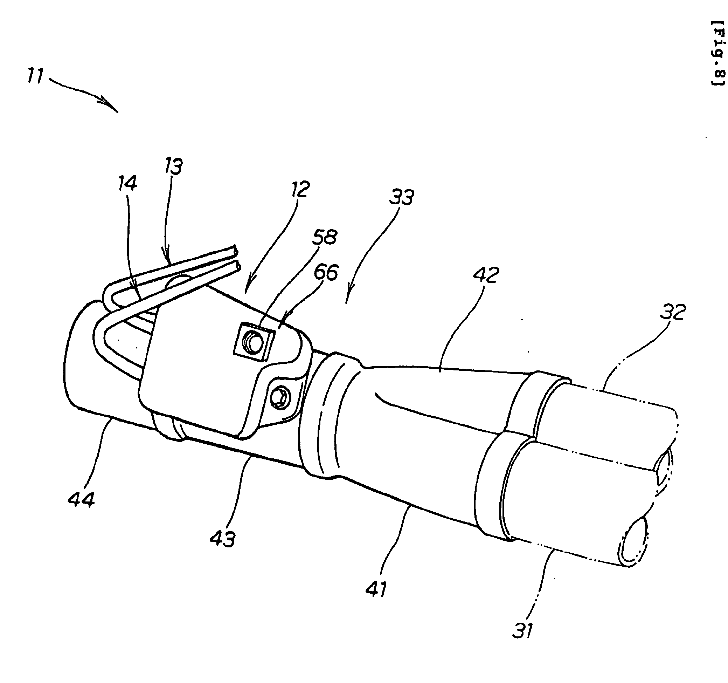

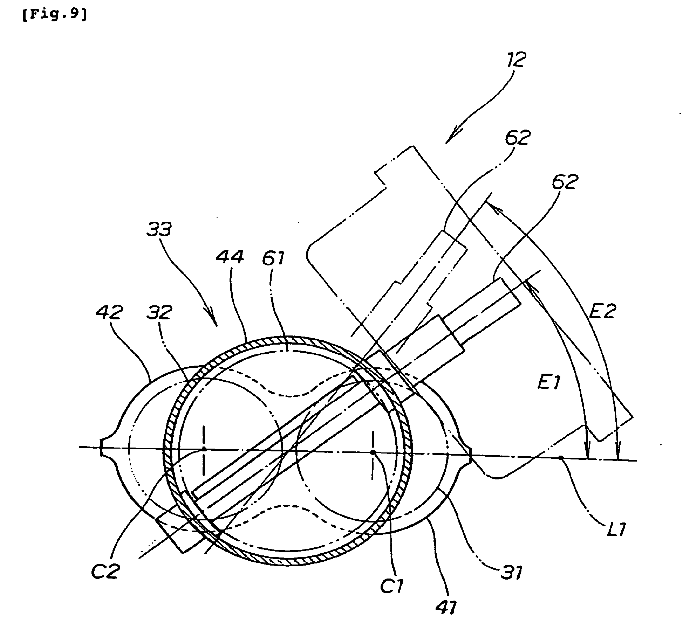

Fig. 8 is a perspective view of the exhaust control device of the motorcycle according to the present invention. Here, the exhaust control device 11 is an exhaust control device of an motorcycle which includes an exhaust collection pipe (collection pipe) 33 which collects a plurality of exhaust pipes (first and second pipes) 31, 32 and an exhaust valve 12 which is mounted on the exhaust collection pipe 33 and controls a flow rate of an exhaust gas to the exhaust collection pipe 33, wherein a valve rod 62 (see Fig. 9) which constitutes a shaft of the exhaust valve 12 is arranged at a position away from the centers of the plurality of exhaust pipes (first and second pipes) 31, 32. Here, C1, C2 indicate respective centers of the first and the second pipes and L1 indicates a straight line which connects the centers C1, C2.

For example, in arranging the exhaust valve which controls the flow rate of the exhaust gas in the exhaust passage including the exhaust pipe, it is desirable to arrange the exhaust valve such that the interruption of the flow of the exhaust gas by the exhaust valve can be suppressed to a least amount because that a smooth flow of the exhaust gas can be ensured and the discharge efficiency is enhanced.

Fig. 9 is an arrangement view showing the arrangement relationship of the exhaust pipe and the exhaust valve of the exhaust control device of the motorcycle according to the present invention. The exhaust control device 11 can ensure a smooth flow of the exhaust gas and the exhaust efficiency can be improved by providing the exhaust valve 12 which controls the flow rate of the exhaust gas to the exhaust collection pipe 33 and by arranging the valve rod (shaft) 62 of the exhaust valve 12 at a position away from the centers C1, C2 of the plurality of exhaust pipes (first and second pipes) 31, 32.
As a result, it is possible to enhance the exhaust gas control ability of the exhaust control device 11 of the motorcycle. Here, numeral 61 indicates a valve of the exhaust valve 12 which is mounted on the valve rod (shaft) 62.

The exhaust control device 11 should be understood such that when the number the plurality of exhaust pipes is set to two, the valve rod (shaft) 62 of the exhaust valve 12 can be inclined or tilted within a range of E1 to E2 (35 to 55 degrees) with respect to the straight line L1 which connects the centers of two exhaust pipes (first pipe and second pipe) 31, 32.

That is, the exhaust control device 411 is constituted such that when the number of the plurality of exhaust pipes is set to two, the valve rod (shaft) 62 of the exhaust valve 12 is inclined within a range of E1 to E2 (35 to 55 degrees) with respect to a straight line which connects the centers of two exhaust pipes (the first pipe and the second pipe) 413, 414 and hence, it is possible to ensure a height of the motorcycle 10 (see Fig. 1) above a ground and to accommodate the exhaust control device 11 within a bank angle. As a result, the degree of freedom of layout of the exhaust control device 11 can be enhanced.

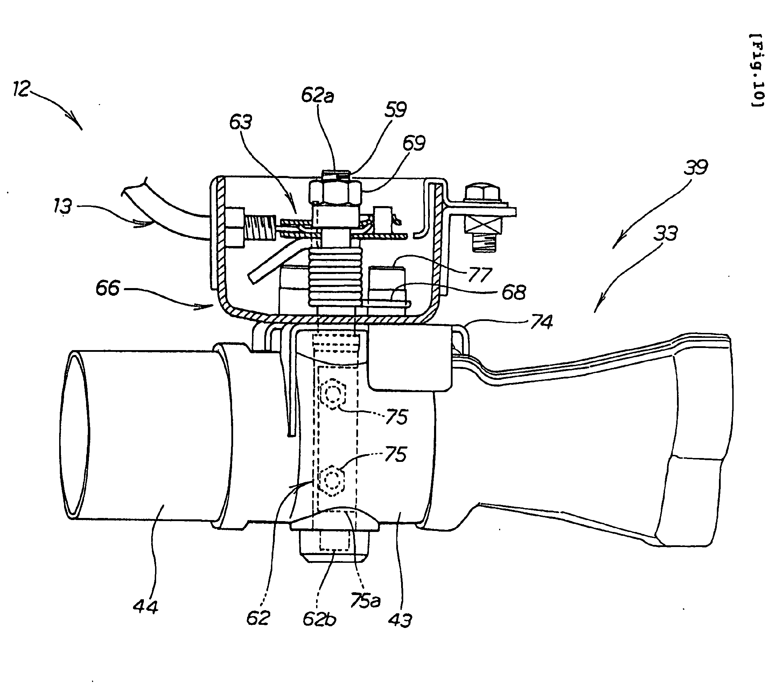

The detailed shape of the exhaust valve 12 is explained hereinafter in conjunction with Fig. 10 to Fig. 13.
Fig. 10 is a front cross-sectional view of the exhaust valve of the exhaust control device of the motorcycle according to the present invention, wherein the exhaust valve 12 includes a valve 61 (see Fig. 9) which changes the flow rate of the exhaust gas in the exhaust pipe 39 (the exhaust collection pipe 33), a valve rod 62 to which the valve 61 is mounted, a pulley 63 which rotates the valve rod 62, a casing 66 which houses the pulley 63, a lid 67 (see Fig. 8) having the previously-mentioned mounting portion 58 which covers the casing 66, a torsion spring 68 which is arranged in a biased manner between the casing 66 and the pulley 63, and a nut 69 which threadedly engaged with a male screw portion 59 formed in one end 62a of the valve rod 62.

In the drawing, numeral 62b indicates another end of the valve rod 62, numeral 74 indicates a stay which is served for mounting the case 66, numeral 75 indicates bolts which fixes the valve 61 (see Fig. 8) to the valve rod 62 by way of washers 75a and numeral 77 is a locking member which locks one end of the torsion spring 68.

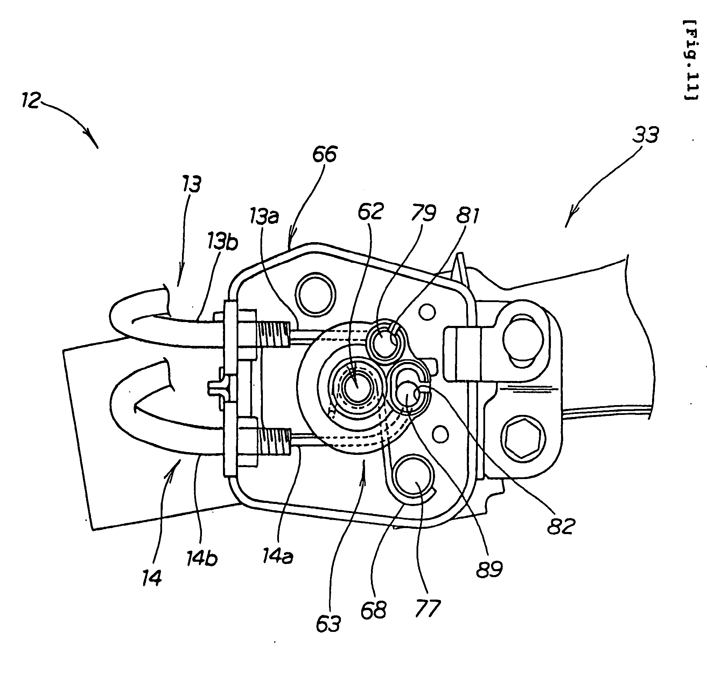

Fig. 11 is a plan view of the exhaust valve of the exhaust control device of the motorcycle according to the present invention and the pulley 63 is provided with a first connection portion 81 into which a cable end 79 which is fixed to a distal end of an inner cable 13a of an operation wire 13 is fitted and a second connection portion 82 into which a cable end 89 which is fixed to the pointed end of an inner cable 14a of an operation wire 14 is fitted.
Further, the operation wires 13, 14 are engaged with an operation wire holder and the operation wire holder is fixed to the casing. Here, numerals 13b, 14b respectively indicate outer tubes of the operation wires 13, 14.

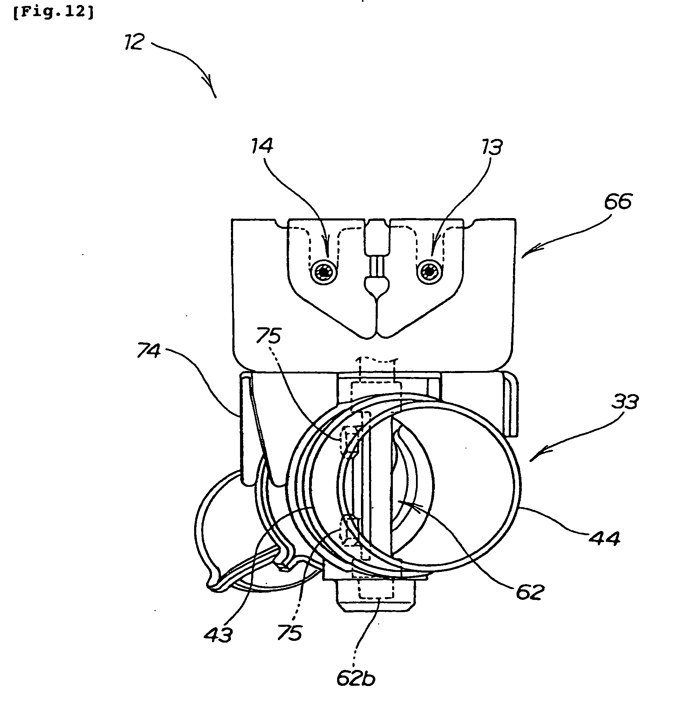

Fig. 12 is a side view of the exhaust valve of the exhaust control device of the motorcycle according to the present invention. With respect to the exhaust valve 12, another end 62b of the valve rod 62 is inserted into the valve mounting portion 43 of the exhaust connection pipe 33, the casing 66 is mounted on one end 62a of the valve rod 62, the pulley 63 (see Fig. 11) is mounted in the casing 66, the operation wires 13, 14 are connected to the pulley 63. By driving the operational wires 13, 14 using the servo motor 15 (see Fig. 6), the valve rod 62 is rotated and hence, the valve 61 (see Fig. 8) which is mounted on the valve rod 62 can be opened and closed.

Next, the manner of operation of the exhaust valve 12 of the exhaust control device 11 is explained.

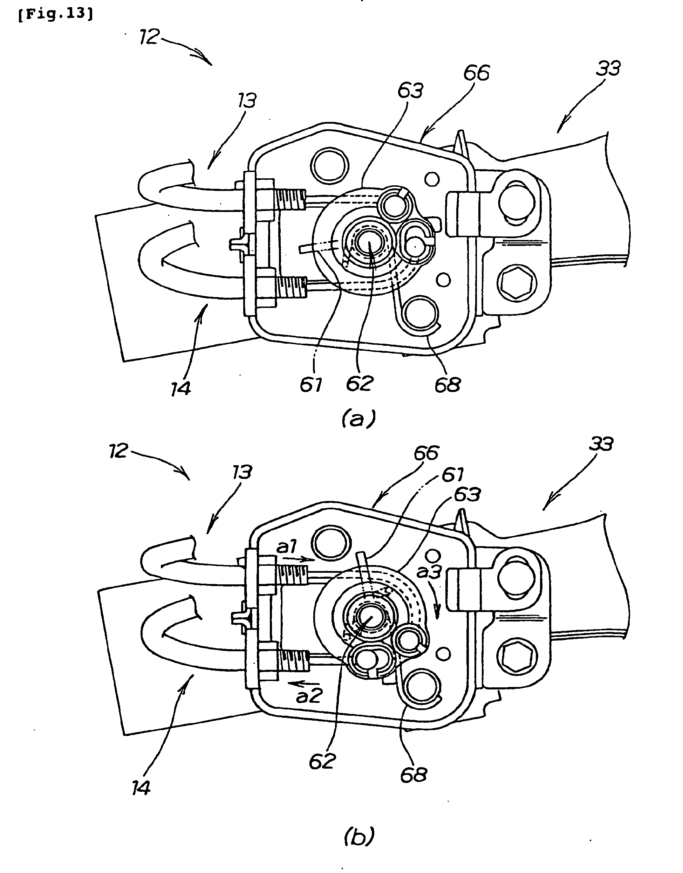

Fig. 13(a) and Fig. 13(b) are operation explanatory views of the exhaust control device of the motorcycle according to the present invention.
Fig. 13(a) shows the exhaust valve 12 which set the valve 61 in an open state.
In Fig. 13(b), the servo motor 15 (see Fig. 6) is driven so as to loosen the operation wire 13 as indicated by an arrow a1, the operation wire 14 is pulled as indicated by an arrow a2, and the pulley 63 is rotated as indicated by an arrow a3 thus setting the exhaust valve 12 in a closed state.

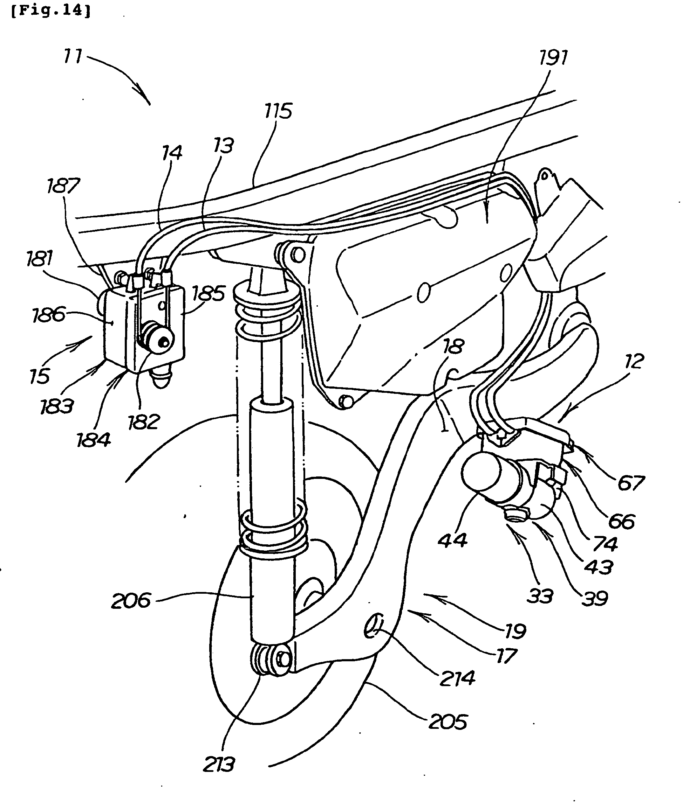

Fig. 14 is a perspective view as viewed from a position behind and above the exhaust control device of the motorcycle according to the present invention. The servo motor 15 includes a motor body 181, a motor-side pulley 182 which is connected to the motor body 181 by way of a gear train (not shown in the drawing), a motor casing 183 which covers the gear train, and a motor cover 184 which covers the motor casing 183.
Here, numeral 185 indicates a front end portion of the servo motor 15, numeral 186 indicates a rear end portion of the servo motor, numeral 187 indicates a motor bracket which is provided for mounting the servo motor 15 on the left seat rail 115.

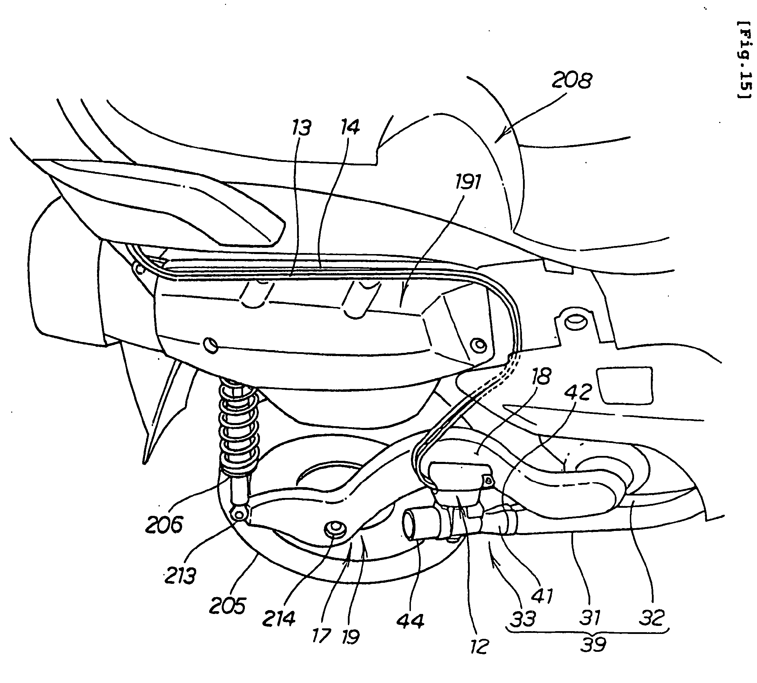

Fig. 15 is a perspective view which shows a rear side face of the exhaust control device of the motorcycle according to the present invention. As shown in Fig. 15, in the motorcycle 10 (see Fig. 2) in which the engine 211 (see Fig. 6) is mounted on the vehicle body frame 110 (see Fig. 4), the exhaust pipe 39 is connected to the engine 211 and the muffler 34 (see Fig. 7) is mounted on the exhaust pipe 39, the exhaust valve 12 which controls the flow rate of the exhaust gas is provided in the vicinity of the connection portion 44 between the exhaust pipe 39 and the muffler 34 as well as on the exhaust pipe 39 side.

For example, to provide a plurality of types of motorcycles which belong to the same line by mounting different mufflers on one type of motorcycle to cope with tastes of users, it is preferable to exchange only the muffler in view of the enhancement of the operability of the exchanging operation and the lowering of the cost for exchanging operation.

Accordingly, by providing the exhaust valve 12 which controls the flow rate of the exhaust gas in the vicinity of a connection portion 44 between the exhaust pipe 39 and the muffler 34 (see Fig. 6) and on the exhaust-pipe-39 side, it is possible to exchange the muffler 34 without influencing the exhaust valve 12.
As a result, the operability of replacing the muffler can be enhanced and the cost of the muffler 34 which is replaced can be reduced.

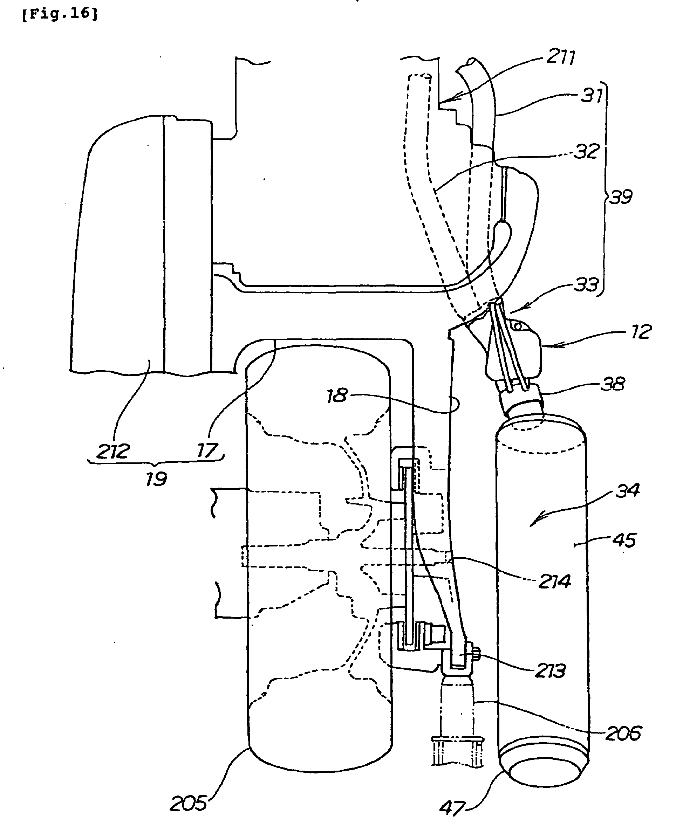

Fig. 16 is a plan view showing the arrangement relationship of the swing arm and the exhaust valve of the exhaust control device of the motorcycle according to the present invention. In view of the drawing, the exhaust control device 11 (see Fig. 6) should be understood that in the motorcycle 10 in which the swing arm 19 is mounted on the vehicle body frame 110 in such a manner that the swing arm 10 can swing in the upward and downward direction and the engine 211 is mounted on the vehicle body frame 110, the exhaust pipe 39 is connected to the engine 211, and the muffler 34 is mounted on the exhaust pipe 39, the exhaust valve 12 which controls the flow rate of the exhaust gas is provided to the exhaust pipe 39 side, the recessed portion 18 which extends toward the vehicle body center is formed on the swing arm 19 side, and the exhaust valve 12 is made to face the vicinity of the recessed portion 18.

For example, in arranging the exhaust valve of the exhaust control device of the motorcycle to the exhaust pipe without widening the vehicle width, it is desirable from a viewpoint of efficient utilization of a layout space if the arrangement can be made without widening the vehicle width.

That is, by forming the recessed portion 18 in the swing arm 19 and making the exhaust valve 12 face the recessed portion 18, the exhaust valve 12 can be pulled over to the body center side and hence, the exhaust valve 12 of the exhaust control device 11 (see Fig. 6) can be arranged on the exhaust pipe 39 without widening the vehicle width.

Further, by also making the operation wires 13, 14 which operate the exhaust valve 12 face the recessed portion 18 side, the operation wires 13, 14 can be pulled out from the exhaust valve 12 while preventing the operation wires 13, 14 from projecting to the outside beyond the vehicle width.

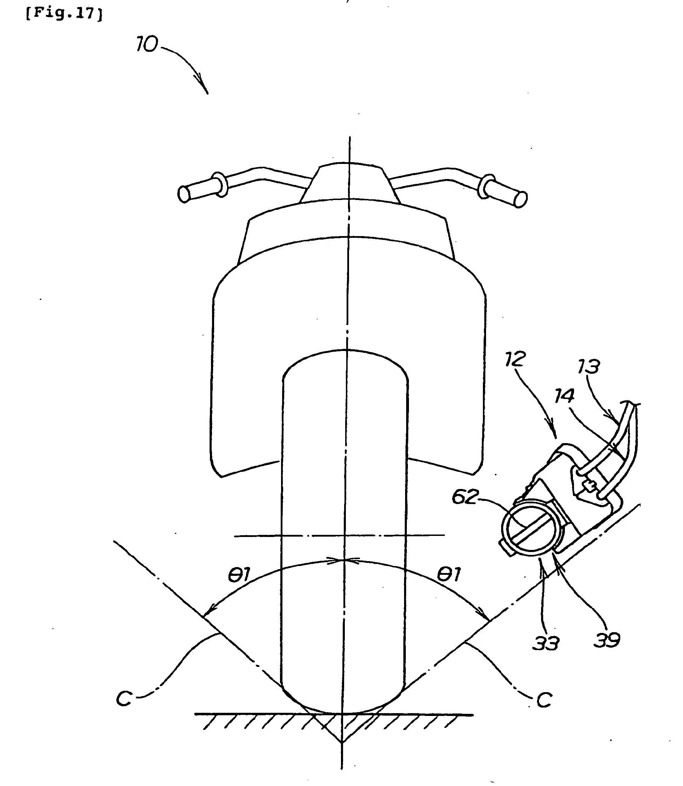

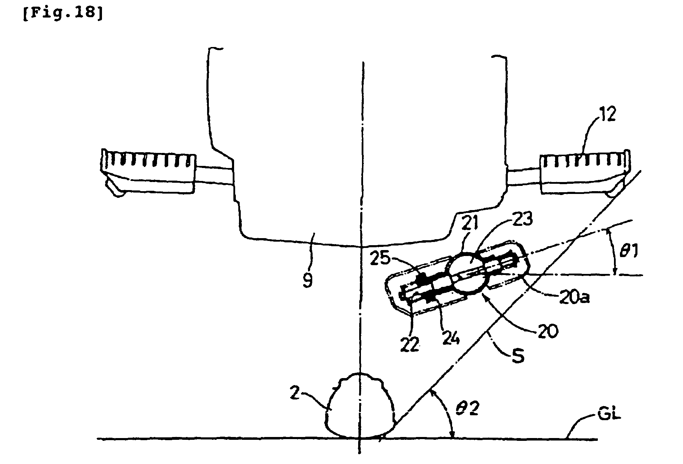

Fig. 17 is an explanatory operational view for showing a mounting angle of the exhaust valve of the exhaust control device of the motorcycle according to the present invention. Here, the exhaust control device 11 should be understood that, in the motorcycle 10 in which the exhaust valve which controls the flow rate of the exhaust gas is mounted in the exhaust pipe 39, assuming an angle by which the body can be fully inclined in the vehicle width direction as a maximum allowable bank angle θ1, the valve rod (shaft) 62 of the exhaust valve 12 is arranged in approximately parallel to the ground surface C when the body is inclined at the maximum allowable bank angle θ1.

For example, in mounting the exhaust valve on the exhaust pipe, whether a height of the motorcycle above a ground is sufficiently ensured or not and whether the operation wires can be easily pulled out or not are matter to be taken into consideration.

By arranging the valve rod (shaft) 62 of the exhaust valve 12 approximately parallel to the ground surface C when the body is inclined at the maximum allowable bank angle θ1, it is possible to suppress the projection of the exhaust valve 12 and to arrange the exhaust valve 12 within the maximum allowable bank angle and, at the same time, the operation wires 13, 14 (the operation wire 14 at a depth side not shown in the drawing) can be easily pulled out from the exhaust valve.

Here, in the embodiment, as shown in Fig. 7, although the exhaust pipe 39 is constituted of two pipes 31, 32 and the exhaust collection pipe 33, the present invention is not limited to such a constitution and the exhaust pipe 39 may be constituted of only one pipe or the exhaust pipe 39 may be constituted such that two pipes are connected to a first exhaust collection pipe and two other pipes are connected to a second exhaust collection pipe and a connection pipe which connects these first and second collection pipes is provided.
That is, in the exhaust pipe, the number of the pipes which extend from the cylinders of the engine is arbitrary and, further, the connection of the pipes is also arbitrary provided that the exhaust valve which controls the flow rate of the exhaust gas is formed in the vicinity of the connection portion between the exhaust pipe and the muffler and on the exhaust pipe side.

Here, in the embodiment, as shown in Fig. 1, although the explanation has been made by adopting the motorcycle 10 as the vehicle, the vehicle is not limited to a two-wheel vehicle and the vehicle may be a four-wheel vehicle or a tricycle.

### [Description of Reference Numerals and Signs]

10: motorcycle, 11: exhaust control device, 12: exhaust valve, 31, 32: exhaust pipe (first and second pipes), 33: collection pipe (exhaust collection pipe), 62: shaft of exhaust valve (valve rod)

## Claims

1. A motorcycle (10) with a vehicle body frame (110) comprising a collection pipe (33) which collects two exhaust pipes (31, 32) and an exhaust valve (12) which controls a flow rate of an exhaust gas to the collection pipe (33), wherein a shaft of the exhaust valve (62) is arranged at a position away from the centres of the two exhaust pipes (31, 32),
and
a swing arm (19) is mounted on the vehicle body frame (110)
**characterized in that** the swing arm has a recessed portion (18) is provided,
whereby the exhaust valve (12) is arranged such that it faces the recessed portion (18).

2. The motorcycle according to claim 1,
wherein the shaft (32) of an exhaust valve (12) is inclined within a range of 35 to 55 degrees with respect to a straight line which connects the centres of two exhaust pipes (31,32),

3. The motorcycle according to claim 1,
wherein the recessed portion (18) extends towards the vehicle body center.

4. The motorcycle according to any of claims 1 to 3,
wherein the swing arm (19) is mounted on the vehicle body frame (110) in such a manner that the swing arm (19) can swing in the upward and downward direction.

5. The motorcycle according to any of claims 1 to 4,
wherein an engine (211) is mounted on the vehicle body frame (110), and an exhaust pipe (39) is connected to the engine (211).

6. The motorcycle according to any of claims 1 to 5,
wherein a muffler (34) is mounted to the exhaust pipe (34).

7. The motorcycle according to claim 5 or 6,
wherein the exhaust valve (12) is provided in the vicinity of a connection portion (44) between the exhaust pipe (39) and a muffler (34).

8. The motorcycle according to any of claims 5 to 7,
wherein the exhaust valve (12) controlling the flow rate of the exhaust gas is provided to the exhaust pipe (39) side.

9. The motorcycle according to any of claims 1 to 8,
wherein operation wires (13, 14) are provided which operate the exhaust valve (12), whereby the operation wires (13, 14) are arranged such that they face the recessed portion (18) side.

## Patentansprüche

1. Motorisiertes Zweirad (10) mit einem Fahrzeugkörper-Rahmen(110), umfassend ein Sammelrohr (33), welches zwei Abgasrohre (31, 32) zusammenführt, und ein Abgasventil (12), welches eine Durchflussrate eines Abgases zu dem Sammelrohr (33) steuert, wobei eine Stange des Abgasventils (62) an einer von den Zentren der beiden Abgasrohre (31, 32) entfernten Position angeordnet ist, und
einen Schwingarm(19), der an dem Fahrzeugkörper-Rahmen (110) angebracht ist, **dadurch gekennzeichnet, dass** der Schwingarmeinen zurückgesetzten Abschnitt (18) aufweist, wobei das Abgasventil (12) derart angeordnet ist, dass es dem zurückgesetzten Abschnitt (18) gegenüberliegt.

2. Motorisiertes Zweirad nach Anspruch 1, wobei die Stange (32) eines Abgasventils (12) innerhalb eines Bereichs von 35 bis 55 Grad in bezug auf eine Gerade geneigt ist, welche die Zentren der beiden Abgasrohre (31, 32) verbindet.

3. Motorisiertes Zweirad nach Anspruch 1, wobei sich der zurückgesetzte Abschnitt (18) zu dem Zentrum des Fahrzeugkörpers hin erstreckt.

4. Motorisiertes Zweirad nach einem der Ansprüche 1 bis 3, wobei der Schwingarm (19) an dem Fahrzeugkörper-Rahmen (110) derart angebracht ist, dass der Schwingarm (19) auf und ab schwingen kann.

5. Motorisiertes Zweirad nach einem der Ansprüche 1 bis 4, wobei ein Motor (211) an dem Fahrzeugkörper-Rahmen (110) angebracht ist, und wobei ein Abgasrohr (39) mit dem Motor (211) verbunden ist.

6. Motorisiertes Zweirad nach einem der Ansprüche 1 bis 5, wobei ein Schalldämpfer (34) an dem Abgasrohr (34) angebracht ist.

7. Motorisiertes Zweirad nach Anspruch 5 oder 6,
wobei das Abgasventil (12) in der Umgebung eines Verbindungsabschnitts (44) zwischen dem Abgasrohr (39) und einem Schalldämpfer (34) vorgesehen ist.

8. Motorisiertes Zweirad nach einem der Ansprüche 5 bis 7,
wobei das die Durchflussrate des Abgases steuernde Abgasventil (12) an der Abgasrohr(39)-Seite bereitgestellt ist.

9. Motorisiertes Zweirad nach einem der Ansprüche 1 bis 8
wobei Steuerleitungen (13, 14) zur Betätigung des Abgasventils (12) vorgesehen sind, und wobei die Steuerleitungen (13, 14) derart angeordnet sind, dass sie der Seite des zurückgesetzten Abschnitts (18) gegenüberliegen.

## Revendications

1. Motocyclette (10) avec un châssis de carrosserie (110) comprenant un tuyau collecteur (33) réunissant deux tuyaux d'échappement (31, 32) et une valve d'échappement (12) régulant un débit d'un gaz d'échappement vers le tuyau collecteur (33), dans laquelle
un arbre de la valve d'échappement (62) est éloigné des centres des deux tuyaux d'échappement (31, 32), et
un bras oscillant (19) est monté sur le châssis de carrosserie (110)
**caractérisée en ce que** le bras oscillant possède une portion en retrait (18),
tandis que la valve d'échappement (12) est disposée pour faire face à la portion en retrait (18).

2. Motocyclette selon la revendication 1,
dans laquelle l'arbre (32) d'une valve d'échappement (12) est incliné entre 35 et 55 degrés par rapport à une ligne droite reliant les centres de deux tuyaux d'échappement (31, 32).

3. Motocyclette selon la revendication 1,
dans laquelle la portion en retrait (18) s'étend vers le centre de la carrosserie.

4. Motocyclette selon l'une quelconque des revendications 1 à 3,
dans laquelle le bras oscillant (19) est monté sur le châssis de carrosserie (110) de telle sorte que le bras oscillant (19) puisse pivoter vers le haut et vers le bas.

5. Motocyclette selon l'une quelconque des revendications 1 à 4,
dans laquelle un moteur (211) est monté sur le châssis de carrosserie (110), et un tuyau d'échappement (39) est connecté au moteur (211).

6. Motocyclette selon l'une quelconque des revendications 1 à 5,
dans laquelle un silencieux (34) est monté sur le tuyau d'échappement (34).

7. Motocyclette selon la revendication 5 ou 6,
dans laquelle la valve d'échappement (12) est prévue au voisinage d'une portion de connexion (44) entre le tuyau d'échappement (39) et un silencieux (34).

8. Motocyclette selon l'une quelconque des revendications 5 à 7,
dans laquelle la valve d'échappement (12) régulant le débit du gaz d'échappement est prévue sur le côté tuyau d'échappement (39).

9. Motocyclette selon l'une quelconque des revendications 1 à 8,
dans laquelle des fils de commande (13, 14) sont prévus pour actionner la valve d'échappement (12), où les fils de commande (13, 14) sont disposés pour faire face au côté portion en retrait (18).
